# EUROPÄISCHE PATENTSCHRIFT

(11) **EP 4 284 649 B1**
(45) Veröffentlichungstag und Bekanntmachung des Hinweises auf die Patenterteilung: **02.07.2025**
(21) Anmeldenummer: 21835981.8
(22) Anmeldetag: 02.12.2021
(51) Int. Cl.: B65H 19/30, B41J 3/44, B41J 3/407, B29C 48/28, B65H 18/08, B65H 75/18, B65B 61/02

(54) **WICKLER ZUM WICKELN EINER MATERIALBAHN**
WINDER FOR WINDING A MATERIAL WEB
ENROULEUR POUR ENROULER UNE BANDE DE MATÉRIAU

(30) Priorität: 07.12.2020 DE 102020132492
(43) Veröffentlichungstag der Anmeldung: 06.12.2023
(73) Patentinhaber: Windmöller & Hölscher KG, 49525 Lengerich (DE)
(72) Erfinder: NÖRING, Isabelle, 49525 Lengerich (DE)
(86) Internationale Anmeldenummer: PCT/EP2021/084035
(87) Internationale Veröffentlichungsnummer: WO 2022/122557

(56) Entgegenhaltungen:
- DE-A1- 102010 044 154
- DE-U1- 202019 002 631
- US-A1- 2010 021 651
- US-A1- 2019 054 677
- US-B2- 10 099 882

## Beschreibung

Die Erfindung betrifft einen Wickler zum Wickeln einer Materialbahn.

Insbesondere bei der Produktion von Kunststoff-Folien ist das Aufwickeln der Folienbahn ein komplizierter Prozess-Schritt, da Kunststoff-Folien in einer großen Vielfalt mit sehr unterschiedlichen Eigenschaften hergestellt werden. Hierdurch wird das Wickelverhalten vielfältig beeinflusst, sodass ein entsprechender Wickler flexibel auf das Verhalten der zu wickelnden Materialbahn anpassbar sein muss.

Typische Verarbeitungsgeschwindigkeiten bei der Produktion von Kunststoff-Folien reichen von 2 bis 1000 m/min, während die Fertigrollen üblicherweise einen Durchmesser von 50 bis 2000 mm und eine Breite von 10 bis 6000 mm besitzen können. Die Dicken der Kunststoff-Folien können von wenigen Mikrometer bis in den Millimeterbereich reichen. Die Rezeptur von Kunststoff-Folien basiert beispielsweise auf Polyolefinen (wie PE Polyethylen oder PP Polypropylene) und reicht von der monoextrudierten Folie, bestehend aus einer einzigen Schicht, bis zur coextrudierten Mehrschichtfolie mit drei, fünf oder mehr Lagen.

In Abhängigkeit von der Produktionstechnik ist außerdem zwischen Flach- und Schlauchfolienbahnen zu unterscheiden. Flachfolienbahnen entstehen bei der Gießfolien-Extrusion, während Schlauchfolienbahnen bei der Blasfolien-Extrusion verarbeitet werden müssen.

Schließlich unterliegt die herzustellende Fertigrolle auch noch weiteren Anforderungen bei der Weiterverarbeitung. Je nach Anforderung werden entweder große Rohrollen, sogenannte Mutterrollen, hergestellt, oder die Folienbahn wird in dem Wickler direkt in mehrere Einzelbahnen geschnitten, die zu schmaleren Fertigrollen, sogenannten Nutzen, aufgewickelt werden.

Als Wickelkerne kommen unterschiedliche Hülsenarten (Hartpapier, Kunststoff, Stahl) zum Einsatz. Bei speziellen Anwendungen wird auch hülsenlos auf eine Stahlwelle aufgewickelt, die nach dem Wickelprozess dann entfernt werden kann. Die Entnahme der Fertigrollen aus dem Wickler erfolgt üblicherweise ohne Unterbrechung des Folienproduktionsprozesses mit Hilfe spezieller Rollenwechselsysteme. Die Fertigrollen werden danach beispielsweise an Endverbraucher geliefert (z. B. zur Verarbeitung als Verpackungsmaterial) oder werden einer Weiterverarbeitung zugeführt, z.B. in Beschichtungs- und Verstreckungsanlagen oder in Druckmaschinen.

Insgesamt besteht ein Wickler zum Wickeln einer Materialbahn in der Regel aus einer Zuführstation zur Förderung der Materialbahn in den Wickler, einer Wickelstation zur Herstellung einer Fertigrolle aus der von der Zuführstation geförderten Materialbahn und einer Übergabestation, in der die Fertigrolle zur Weiterverarbeitung aus dem Wickler entnehmbar ist. Die Prozesse in der Zuführstation, der Wickelstation und der Übergabestation werden dabei von einer Steuereinheit bzw. von mehreren Steuereinheiten gesteuert.

Bei dem in der Wickelstation eingesetzten Wickelverfahren wird regelmäßig die Folienbahn über eine Umlenkwalze geführt und dann auf eine Folienrolle aufgewickelt. Hinsichtlich des Zusammenspiels zwischen Umlenkwalze und Folienrolle ist dabei zwischen den folgenden drei Verfahren zu unterscheiden:
- Kontaktwicklung,
- Zentralwicklung und
- Kontakt-Zentralwicklung.

Bei der Kontaktwicklung wird nur die Umlenkwalze angetrieben, wobei die Umlenkwalze dabei als Kontaktwalze arbeitet und gegen die Folienrolle gepresst wird. Der Kontaktdruck muss derart gewählt werden, dass der Folienwickel in Drehung versetzt wird und gleichzeitig ein Schlupf sicher vermieden wird. Außerdem wird über den Kontaktdruck auch die Härte des Folienwickels beeinflusst. Die Kontaktwicklung ist somit ein einfaches Verfahren für unempfindliche Folien.

Bei der Zentralwicklung wird im Gegensatz zur Kontaktwicklung die Folienrolle angetrieben. Die Umlenkwalze wird in der Regel nicht gegen die Folienrolle angestellt, sondern wird im Abstand zur Folienrolle mit einem definierten Wickelspalt betrieben. In diesem Fall wird deshalb auch von "Spaltwicklung" gesprochen. Die Zentralwicklung ist vor allem für empfindliche und weich zu wickelnde Folien geeignet, für die eine Kontaktwicklung nicht in Betracht kommt.

Bei der Kontakt-Zentralwicklung handelt es sich um eine Kombination aus Kontaktwicklung und Zentralwicklung, sodass nunmehr sowohl die Umlenkwalze als auch die Folienrolle angetrieben werden. Mit diesem Verfahren kann den unterschiedlichsten Folienarten über die Einstellung von Bahnzug- und Kontaktkräften Rechnung getragen werden. Auch das Wickeln mit einem definierten Wickelspalt oder das Aufbringen einer in engen Grenzen geregelten Kontaktkraft sind möglich. Die Kontakt-Zentralwicklung erlaubt es somit, einen Wickler mit maximaler Flexibilität zu betreiben.

Ein weiterer wichtiger Maschinenparameter in der Wickelstation ist die Lagerung der Folienrolle gegenüber dem Maschinenrahmen. Hierbei sind regelmäßig die folgenden vier Maschinenkonzepte zu unterscheiden:
- Tragschienenwickler
- Schwenkarmwickler
- Wendewickler
- Dreharmwickler

Beim Tragschienenwickler verschiebt sich der Mittelpunkt der Folienrolle mit zunehmendem Rollendurchmesser entlang einer horizontalen Führungsschiene. Tragschienenwickler arbeiten häufig mit dem Verfahren der Kontaktwicklung, allerdings können je nach Maschinenausstattung auch die Zentralwicklung oder die Kontakt-Zentralwicklung zum Einsatz kommen. Der Tragschienenwickler basiert auf einem einfachen Prinzip und ist daher als Wickler weit verbreitet.

Im Schwenkarmwickler wird die Folienrolle in einem gestellfesten Dreharm aufgenommen, der mit zunehmendem Rollendurchmesser von der Kontaktwalze abschwenkt. Bei entsprechender Maschinengestaltung kann das Rollengewicht im Kontaktwickelmodus zur Erzeugung des Kontaktdrucks genutzt werden. Darüber hinaus kann die Kontaktwalze horizontal beweglich gelagert werden, um feinfühlig einstellbare Kontaktdrücke zu ermöglichen. Mit einem zweiten Antrieb ist auch eine Kontakt-Zentralwicklung möglich. Nachdem die Wicklung abgeschlossen ist, wird der Dreharm weiterhin dazu verwendet, um die Fertigrolle von der Wickelstation in die Übergabestation abzulegen.

Beim Wendewickler sind zwei Wickelwellen auf einer drehbaren Wendescheibe angeordnet. Ist der gewünschte Rollendurchmesser bei der Folienrolle erreicht, schwenkt die Wendescheibe während des laufenden Wickelvorgangs um 180 ° und bringt eine leere Wickelhülse in die Anwickelposition. Die Folienbahn wird automatisch abgetrennt, und der Anfang der Folienbahn wird auf die neue Hülse angewickelt. Aus der abgeschwenkten Wickelposition wird die Fertigrolle entnommen. Wendewickler arbeiten üblicherweise nach dem Verfahren der Zentralwicklung. Neben Wicklern mit zwei Wickelpositionen auf der Wendescheibe kommen bei schnell laufenden Anwendungen (z. B. Stretchfolien-Kurzrollen) auch Wendewickler mit bis zu vier Wickelpositionen zum Einsatz.

Beim Dreharmwickler wird eine Wickelwelle auf einer kreisringförmigen Wendescheibe aufgenommen. Eine zweite Wickelwelle wird in einem Dreharm gehalten, der unabhängig von der Wendescheibe geschwenkt werden kann. Mit Dreharmwicklern können auf diese Weise die bei Wendewicklern im Wendevorgang auftretenden Bahnlängenänderungen und die damit zwangsläufig verbundenen Prozessbeeinflussungen reduziert werden.

Bei der Wicklung einer Kunststoff-Folie fließen sämtliche der oben genannten Parameter in die Qualität der hergestellten Fertigrolle ein. Nur eine qualitativ hochwertig gewickelte Fertigrolle ermöglicht den reibungslosen Ablauf der nachfolgenden Verarbeitungsprozesse wie Kaschierung, Bedruckung oder Konfektionierung. Neben allgemeinen Kenngrößen wie Rollenbreite, Gewicht, Außendurchmesser, Kerndurchmesser und Lauflänge sind Kantengeradheit, saubere Kantenverlegung, Rundheit, Auswuchtung und Transparenz bzw. Opazität der Folienrolle wichtige Qualitätskriterien. Die Beurteilung einer Folienrolle sowie der auftretenden Wickeldefekte ermöglicht somit den Rückschluss auf korrekt eingestellte Wickelparameter oder auch auf Fehler bei der Konfiguration des Wicklers.

Die Auswertung von Wickeldefekten ist daher ein wichtiges Element im Rahmen der Qualitätskontrolle. Um eine derartige Auswertung effizient handhaben zu können, wird die Fertigrolle in der Übergabestation üblicherweise mit einer Kennung versehen, die eine eindeutige Identifizierung und Zuordnung der Fertigungsrolle zu den Herstellungsparametern ermöglicht. Die Kennung ist hierbei üblicherweise auf einem Etikett aufgebracht (z. B. in Form eines Barcodes), wobei das Etikett von dem Bediener in der Übergabestation auf die Fertigrolle aufgeklebt wird. Zum Ausdrucken des Etiketts steht für den Bediener getrennt von dem Wickler ein Etikettendrucker bereit, wobei die Steuereinheit eine elektrische Schnittstelle zu dem Etikettendrucker aufweist. Über die elektrische Schnittstelle können somit die benötigten Druckparameter zum Etikett übertragen werden können. Diese Übertragung geschieht gegebenenfalls auch über eine zwischengeschaltete Cloud oder einen Druckerserver, wobei in der Cloud bzw. auf dem Druckerserver das digitale Rollenprotokoll in einer Datenbank abgespeichert ist. Die Kennung auf dem Etikett liefert dann einen Verweis zu dem betreffenden Eintrag in die Datenbank, in dem sämtliche Produktionsparameter der betreffenden Fertigrolle protokolliert sind.

Neben den Produktionsparametern können auch lokale Fehler sowie die entsprechenden Positionen auf der Materialbahn im digitalen Rollenprotokoll abgespeichert werden. Nach Abschluss des Fertigungsprozesses ist es dann beispielsweise mit Hilfe eines Umrollers möglich, den fehlerhaften Bereich der Materialbahn anzufahren und herauszutrennen. Ebenso ist es möglich, dass bereits während der Produktion die fehlerhaften Bereiche auf der Materialbahn markiert und dann in der späteren Weiterverarbeitung ausgeschleust werden.

Die eingesetzten Etikettendrucker arbeiten üblicherweise als Desktop-Drucker nach dem Thermotransfer-Prinzip, dem Thermodirekt-Prinzip oder dem Inkjet-Prinzip. Allen Druckprinzipien ist dabei gemeinsam, dass regelmäßig Wartungsarbeiten zu erledigen sind, wie zum Beispiel das Wechseln des Farbbandes, das Nachlegen von Etiketten oder das Wechseln einer Etikettenrolle. US 10 099 882 B2 und US 2010/021651 A1 offenbaren Wickelvorrichtungen, welche eine Etikettendrucker umfassen. US 2019/054677 A1 offenbart eine Kammer-Vakuum-Verpackungsmaschine, welche eine Schublade für einen Label-Drucker beinhaltet.

Aufgabe der Erfindung ist es, die Durchführung der für den Etikettendrucker erforderlichen Wartungsarbeiten zu vereinfachen.

Diese Aufgabe wird durch die Merkmale des Patentanspruchs 1 gelöst. Weitere bevorzugte Ausführungsformen ergeben sich aus den Unteransprüchen.

Eine wesentliche Erkenntnis der Erfindung besteht darin, dass die Übergabestation zu dem Etikettendrucker eine mechanische Schnittstelle aufweist. Da der Etikettendrucker mit Bezug auf den Wickler ein Zukauf-Produkt ist, wurde der Etikettendrucker bislang als Desktop-Drucker eingesetzt, sodass eine mechanische Schnittstelle zwischen Übergabestation und Etikettendrucker für den Fachmann nicht in Betracht kam. Es hat sich jedoch gezeigt, dass es sich lohnt, die standardmäßige Desktop-Umgebung zugunsten einer mechanischen Schnittstelle aufzugeben, wenn gleichzeitig mit der mechanischen Schnittstelle die Bedienung des Etikettendruckers vereinfacht und optimiert werden kann.

Nach einer bevorzugten Ausführungsform ist vorgesehen, dass der Etikettendrucker eine Barcode-Druckeinheit aufweist, wobei mit dem Barcode die besagte Kennung auf das Etikett gedruckt wird. Besonders vorzugsweise weist der Etikettendrucker eine QR-Code-Druckeinheit auf. Der QR-Code (englisch Quick Response) ist ein zweidimensionaler Code, der beispielsweise in EP 0 672 994 A1 beschrieben ist. Der QR-Code besteht aus einer quadratischen Matrix mit schwarzen und weißen Quadraten, die die kodierten Daten binär darstellen. Eine spezielle Markierung in drei der vier Ecken des Quadrats gibt die Orientierung vor. Die Daten im QR-Code sind gegenüber dem Barcode durch einen fehlerkorrigierenden Code erweitert. Dadurch wird der Verlust von bis zu 30 % des Codes toleriert. Weitere Varianten sind der Micro-QR-Code, der Secure-QR-Code (SQRC), der iQR-Code und der Frame-QR-Code.

Nach einer weiteren bevorzugten Ausführungsform ist vorgesehen, dass der Etikettendrucker eine RFID-Druckeinheit aufweist. Die sogenannte Radio Frequency Identification (RFID) ermöglicht die automatische Identifikation einer Fertigrolle per Funk mithilfe elektromagnetischer Wellen. RFID-Etiketten können genauso wie Barcode Etiketten bzw. QR-Code-Etiketten gedruckt und appliziert werden. Die Etiketten enthalten dann einen RFID-Transponder, auf dem Daten gespeichert, verändert und gelöscht werden können. Ein RFID-Lesegerät kann sie auslesen und wahlweise auch neu beschreiben. Die wesentlichen Vorteile der RFID-Etiketten gegenüber Barcode Etiketten bzw. QR-Code-Etiketten sind das kontaktlose Verfahren sowie der sichere und schnelle Datenaustausch.

Nach einer weiteren bevorzugten Ausführungsform ist vorgesehen, dass der Etikettendrucker eine Datenbank-Schnittstelle aufweist. Die Datenbank-Schnittstelle erlaubt beispielsweise die oben beschriebene Einbindung in das digitale Rollenprotokoll.

Erfindungsgemäss ist vorgesehen, dass die mechanische Schnittstelle eine Teleskopschublade aufweist. Auf diese Weise kann der Etikettendrucker in der Übergabestation an einer idealen Position platziert werden, um eine schnelle Entnahme der Etiketten und ein direktes Aufkleben der Etiketten auf die Fertigrolle durch den Bediener zu ermöglichen. Außerdem ist eine leichte und ergonomische Wartung des Etikettendruckers möglich, wie z.B. das Nachfüllen von Etikettenrollen. Schließlich erlaubt die mechanische Schnittstelle einer Teleskopschublade eine nahtlose Integration des Etikettendruckers in den Wickler, wobei der Etikettendrucker gleichzeitig vor äußeren Einflüssen (z.B. Beschädigungen oder Verschmutzungen) besser geschützt ist.

Nach einer weiteren bevorzugten Ausführungsform ist vorgesehen, dass die mechanische Schnittstelle einen Etiketten-Spendestempel zum automatischen Aufbringen von gedruckten Etiketten auf die Fertigrolle in der Übergabestation aufweist. Mit einer derartigen mechanischen Schnittstelle kann das Drucken und Applizieren der Etiketten vollständig automatisiert werden. Die Wartungsarbeiten für den Etikettendrucker können in diesen vollautomatischen Prozess nahtlos integriert werden, indem der Bediener von der Steuereinheit immer in dafür geeigneten Druckpausen zu der Durchführung von Wartungsarbeiten aufgefordert wird. Umgekehrt kann der Produktionsprozess einer Fertigrolle verzögert, pausiert oder gestoppt werden, wenn notwendige Wartungsarbeiten am Etikettendrucker ausbleiben, wobei in diesem Falle von der Steuereinheit zweckmäßigerweise ein Warnsignal ausgegeben wird

Nach einer weiteren bevorzugten Ausführungsform ist vorgesehen, dass die Materialbahn aus einer Kunststoff-Folie besteht.

Weitere Einzelheiten und Vorteile der Erfindung werden anhand der beigefügten Zeichnungen beschrieben. In diesen zeigen:
- Fig. 1: eine schematische Seitenansicht eines Doppel-Tragschienenwicklers einer Blasfolien-Extrusionsanlage,
- Fig. 2: eine erste schematische 3D-Ansicht des rechten Tragschienenwicklers gemäß Fig. 1,
- Fig. 3: eine zweite schematische 3D-Ansicht des rechten Tragschienenwicklers gemäß Fig. 1, und
- Fig. 4: eine dritte schematische 3D-Ansicht des rechten Tragschienenwicklers gemäß Fig. 1.

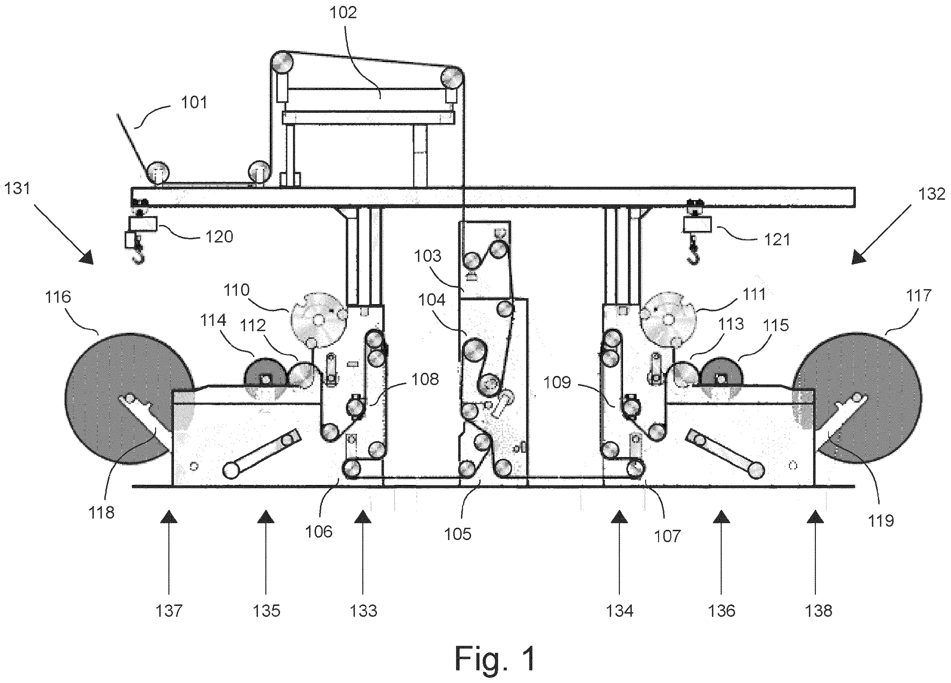

Fig. 1 zeigt eine schematische Seitenansicht eines Doppel-Tragschienenwicklers einer Blasfolien-Extrusionsanlage. Die vorgeschaltete Blasfolien-Extrusionsanlage liefert einen Folienschlauch 101, der über eine Bahnmittenregelung 102 geführt wird und im Anschluss daran eine Vorbehandlung 103 zur Erhöhung der Oberflächenspannung passiert. Danach fördert der Vorzug 104 den Folienschlauch zu der Längsschneide-Einrichtung 105, wo der Folienschlauch aufgeschlitzt und in zwei Materialbahnen aufgeteilt wird. Der weitere Betrieb läuft dann im Prinzip symmetrisch ab, d. h., die erste Materialbahn wird dem linken Tragschienenwickler 131 zugeführt und die zweite Materialbahn wird dem rechten Tragschienenwickler 132 zugeführt.

Ihrem grundsätzlichen Aufbau nach bestehen die Tragschienenwickler 131, 132 aus einer Zuführstation 133, 134 zur Förderung der Materialbahn in den Wickler, einer Wickelstation 135, 136 zur Herstellung einer Fertigrolle aus der von der Zuführstation geförderten Materialbahn und einer Übergabestation 137, 138, in der die Fertigrolle zur Weiterverarbeitung aus dem Wickler entnehmbar ist.

In der Zuführstation 133, 134 befinden sich Pendelwalzen 106, 107, die die Bahnspannung messen. Mit diesen Messwerten errechnet die Steuereinheit (nicht näher dargestellt) die benötigten Antriebswerte im Tragschienenwickler 131, 132, um die Bahnspannung auf einen vorgegebenen Sollwert zu regeln. In der Zuführstation 133, 134 können sich außerdem beispielsweise Längsschneide-Vorrichtungen 108, 109 vorgesehen sein, die mit Breitstreck-Walzen zusammenwirken, um die Materialbahn in mehrere parallele Nutzen aufzuteilen und zu konfektionieren.

Das Kernstück der Wickelstation 135, 136 bilden die Umlenkwalze 112, 113 sowie die Folienrolle 114, 115. Die Folienrolle 114, 115 ist dabei entlang einer horizontalen Führungsschiene in Abhängigkeit vom Rollendurchmesser verschiebbar. Die Wickelstation 135, 136 ist außerdem mit Funktionen zum automatisierten Rollenwechsel versehen. Dazu gehören Schneidsysteme mit Zieh- oder Schlagklingen, die in der Umlenkwalze 112, 113 angeordnet sind. Diese durchtrennen die kontinuierlich zugeführte Materialbahn bei Erreichen des Fertigrollendurchmessers. Über geeignete Anwickelmechanismen wird das durch den Schnitt erzeugte Folienende automatisch auf die neue Wickelhülse angewickelt. Hierzu werden neue Hülsen zusammen mit Wickelwellen in dem Magazin 110, 111 vorgehalten und beim Rollenwechsel vollautomatisch in die Anwickelposition gebracht.

Die Übergabestation 137, 138 ist schließlich für den Abtransport der häufig mehrere Tonnen schweren Fertigrollen 116, 117 verantwortlich. Hierzu sind beispielsweise Ablegearme 118, 119 und Kransysteme 120, 121 vorgesehen. Die Kransysteme 120, 121 dienen außerdem dazu, um neue Hülsen in dem Magazin 110, 111 zur neuerlichen Verwendung abzulegen.

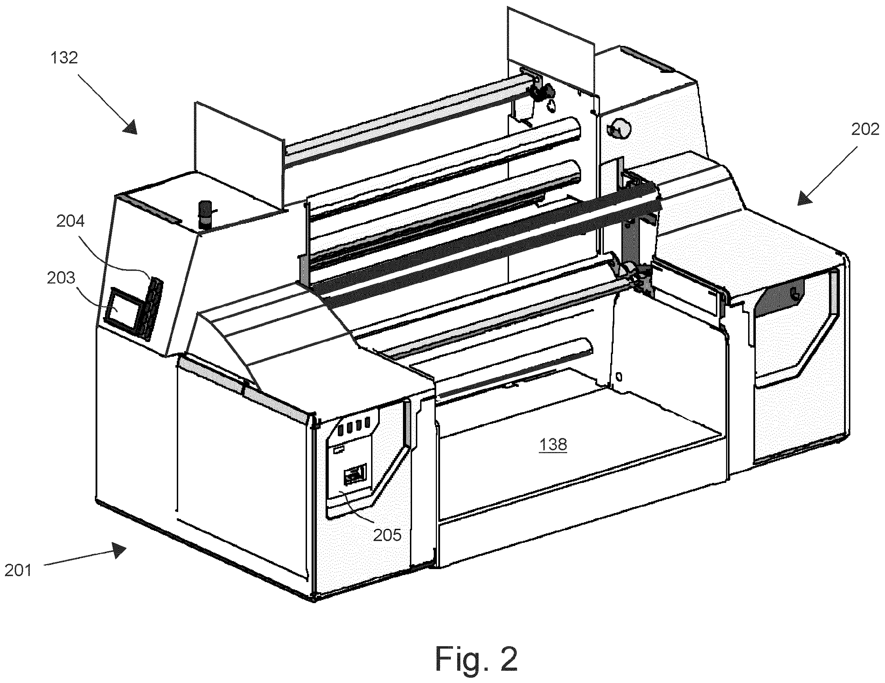

Fig. 2 zeigt eine erste schematische 3D-Ansicht des rechten Tragschienenwicklers 132 gemäß Fig. 1. Die entsprechenden Bezugszeichen aus Fig. 1 wurden übernommen, sodass insoweit auf die Beschreibung von Fig. 1 verwiesen wird. Die beiden horizontalen Tragschienen des Tragschienenwicklers 132 befinden sich jeweils in dem vorderen Seitenteil 201 und dem hinteren Seitenteil 202 und ragen bis in die Übergabestation 138 hinein. In dem vorderen Seitenteil 201 ist außerdem auch die nicht weiter sichtbare Steuereinheit mit einem Touch-Screen 203 und einem Tastenfeld 204 verbaut. Die Steuereinheit weist eine elektrische Schnittstelle zu einem Etikettendrucker 205 auf, der in der Front des vorderen Seitenteils 201 eingesetzt ist. Der Etikettendrucker 205 ist vorzugsweise ein Barcode-Printer. Sobald eine Fertigrolle in der Übergabestation 138 zur Entnahme bereitgestellt ist, druckt der Etikettendrucker 205 automatisch eine selbstklebende Etikette, die vom Bediener dann entnommen und zur Kennzeichnung auf die Fertigrolle aufgebracht werden kann.

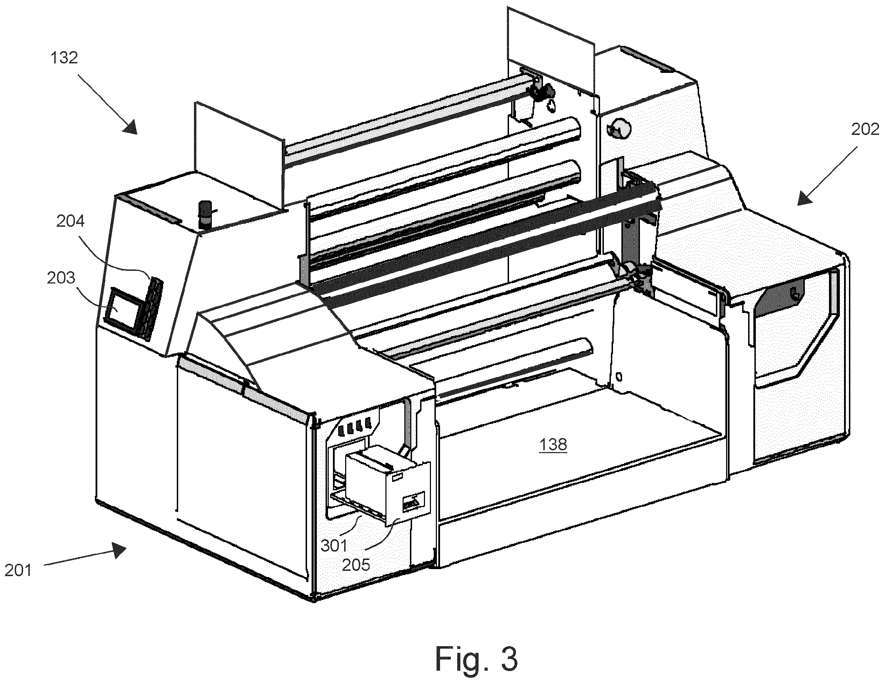

Fig. 3 zeigt eine zweite schematische 3D-Ansicht des rechten Tragschienenwicklers 132 gemäß Fig. 1. Die entsprechenden Bezugszeichen aus Fig. 1 und Fig. 2 wurden übernommen, sodass insoweit auf die Beschreibung von Fig. 1 und Fig. 2 verwiesen wird. Als mechanische Schnittstelle zwischen der Übergabestation 138 und dem Etikettendrucker 205 ist eine Teleskopschublade 301 vorgesehen, sodass der Etikettendrucker zwischen der eingefahrenen Position gemäß Fig. 2 und der ausgefahrenen Position gemäß Fig. 3 verfahrbar ist. In der ausgefahrenen Position gemäß Fig. 3 ist es für den Bediener auf einfache Weise möglich, Wartungsarbeiten durchzuführen, wie zum Beispiel das Wechseln des Farbbandes oder das Wechseln einer Etikettenrolle. Die eingefahrene Position gemäß Fig. 2 dient dagegen als Betriebsposition. In dieser Position ist der Etikettendrucker 205 wirksam vor äußeren Einflüssen geschützt und stellt gleichzeitig auch keine Behinderung für den Bediener dar.

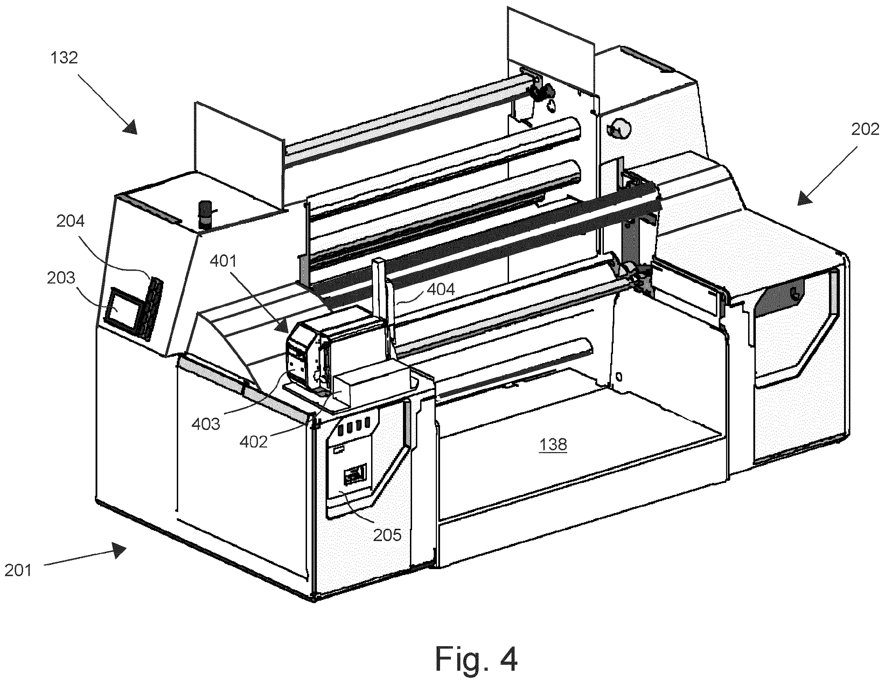

Fig. 4 zeigt eine dritte schematische 3D-Ansicht des rechten Tragschienenwicklers 132 gemäß Fig. 1. Die entsprechenden Bezugszeichen aus Fig. 1, Fig. 2 und Fig. 3 wurden übernommen, sodass insoweit auf die Beschreibung von Fig. 1, Fig. 2 und Fig. 3 verwiesen wird. Neben dem Etikettendrucker 205 weist der rechte Tragschienenwickler 132 nun auch einen Etikettendruck-Spender 401 auf. Der Etikettendruck-Spender 401 kann dabei zusätzlich oder alternativ zum dem Etikettendrucker 205 vorgesehen sein. Vorzugsweise ist der Etikettendruck-Spender 401 ein RFID-Printer zum automatischen Applizieren von RFID-Labels.

Der Etikettendruck-Spender 401 besteht aus einer eigenen Steuereinheit 402, der eigentlichen Druckeinheit 403 und dem Sendestempel 404, sodass der Etikettendruck-Spender 401 vollautomatisch betrieben werden kann. Sobald eine Fertigrolle in der Übergabestation 138 zur Entnahme bereitgestellt ist, druckt die Druckeinheit 403 eine Etikette, die vom Sendestempel 404 automatisch zur Kennzeichnung auf die Fertigrolle aufgebracht wird. Das Aufbringen der Etiketten vom Sendestempel 404 erfolgt dabei automatisch per Druckluft mit einem sogenannten Tamp-Blow-Applikator (engl. "tamp" für festdrücken und "blow" für anblasen). Dazu wird die Etikette über eine kurze Distanz per Luftstoß oder über direkten Kontakt der federnd gelagerten Spendeplatte zur Oberfläche der Fertigrolle gespendet. Der variable Spendehub des Sendestempels 404 ermöglicht zudem die automatische Etikettierung von Fertigrollen mit unterschiedlichen Durchmessern. Zudem verfügt der Sendestempel 404 über eine Lese-Einheit, mit der nach dem Aufbringen der Etikette überwacht werden kann, ob sich die Etikette in der richtigen und lesebereiten Position auf der Oberfläche der Fertigrolle befindet.

| **Bezugszeichenliste** | |
|---|---|
| 101 | Folienschlauch |
| 102 | Bahnmittenregelung |
| 103 | Vorbehandlung |
| 104 | Vorzug |
| 105 | Längsschneide-Einrichtung |
| 106 | Pendelwalze |
| 107 | Pendelwalze |
| 108 | Längsschneide-Vorrichtung |
| 109 | Längsschneide-Vorrichtung |
| 110 | Magazin |
| 111 | Magazin |
| 112 | Umlenkwalze |
| 113 | Umlenkwalze |
| 114 | Folienrolle |
| 115 | Folienrolle |
| 116 | Fertigrollen |
| 117 | Fertigrollen |
| 118 | Ablegearme |
| 119 | Ablegearme |
| 131 | Tragschienenwickler |
| 132 | Tragschienenwickler |
| 133 | Zuführstation |
| 134 | Zuführstation |
| 135 | Wickelstation |
| 136 | Wickelstation |
| 138 | Übergabestation |
| | |
| 201 | Vorderes Seitenteil |
| 202 | Hinteres Seitenteil |
| 203 | Touch-Screen |
| 204 | Tastenfeld |
| 205 | Etikettendrucker |
| | |
| 401 | Etikettendruck-Spender |
| 402 | Steuereinheit |
| 403 | Druckeinheit |
| 404 | Sendestempel |

## Patentansprüche

1. Wickler zum Wickeln einer Materialbahn,
mit einer Zuführstation zur Förderung der Materialbahn in den Wickler,
mit einer Wickelstation zur Herstellung einer Fertigrolle aus der von der Zuführstation geförderten Materialbahn,
mit einer Übergabestation, in der die Fertigrolle zur Weiterverarbeitung aus dem Wickler entnehmbar ist,
mit einer Steuereinheit zur Steuerung der Zuführstation, der Wickelstation und der Übergabestation,
wobei die Steuereinheit eine elektrische Schnittstelle zu einem Etikettendrucker aufweist, und
wobei die Übergabestation zu dem Etikettendrucker eine mechanische Schnittstelle aufweist, **dadurch gekennzeichnet, dass**
die mechanische Schnittstelle eine Teleskopschublade aufweist, sodass der Etikettendrucker zwischen einer eingefahrenen Position und einer ausgefahrenen Position, in der der Bediener Wartungsarbeiten durchführen kann, verfahrbar ist, wobei die eingefahrene Position als Betriebsposition dient.

2. Wickler nach Anspruch 1, wobei der Etikettendrucker eine Barcode-Druckeinheit aufweist.

3. Wickler nach einem der Ansprüche 1 - 2, wobei der Etikettendrucker eine RFID-Druckeinheit aufweist.

4. Wickler nach einem der Ansprüche 1 - 3, wobei der Etikettendrucker eine Datenbank-Schnittstelle aufweist.

5. Wickler nach einem der Ansprüche 1 - 4, wobei die mechanische Schnittstelle einen Etiketten-Spendestempel zum automatischen Aufbringen von gedruckten Etiketten auf die Fertigrolle in der Übergabestation aufweist.

6. Wickler nach einem der Ansprüche 1 - 5, wobei die Materialbahn aus einer Kunststoff-Folie besteht.

## Claims

1. Winder for winding a material web,
with a feed station for conveying the material web into the winder,
comprising a winding station for producing a finished roll from the material web conveyed by the feed station,
with a transfer station, in which the finished roll can be removed from the winder for further processing,
with a controller for controlling the feed station, the winding station and the transfer station,
wherein the controller has an electric interface for a label printer, and
wherein the transfer station has a mechanical interface for the label printer, **characterized in that**
the mechanical interface has a telescopic drawer such that the label printer can be moved between a retracted position and an extended position, in which the operator can perform maintenance work, wherein the retracted position is used as the operating position.

2. Winder according to claim 1, wherein the label printer has a barcode printing unit.

3. Winder according to any one of claims 1 - 2, wherein the label printer has an RFID printing unit.

4. Winder according to any one of claims 1 - 3, wherein the label printer has a database interface.

5. Winder according to any one of claims 1 - 4, wherein the mechanical interface has a label applicator pad for automatically applying printed labels to the finished roll in the transfer station.

6. Winder according to any one of claims 1 - 5, wherein the material web consists of a plastic film.

## Revendications

1. Enrouleur pour enrouler une bande de matériau,
avec une station d'alimentation pour transporter la bande de matériau dans l'enrouleur,
avec une station d'enroulement pour la fabrication d'un rouleau fini à partir de la bande de matériau transportée par la station d'alimentation,
avec une station de transfert dans laquelle le rouleau fini peut être retiré de l'enrouleur pour traitement ultérieur,
avec une unité de commande pour commander la station d'alimentation, la station d'enroulement et la station de transfert,
dans laquelle l'unité de commande présente une interface électrique vers une imprimante d'étiquettes, et
dans laquelle la station de transfert présente une interface mécanique vers l'imprimante d'étiquettes, **caractérisée en ce que**
l'interface mécanique présente un tiroir télescopique, de sorte que l'imprimante d'étiquettes puisse être déplacée entre une position rétractée et une position déployée dans laquelle l'opérateur peut effectuer des travaux d'entretien, dans laquelle la position rétractée sert de position de fonctionnement.

2. Enrouleur selon la revendication 1, dans laquelle l'imprimante d'étiquettes présente une unité d'impression de codes-barres.

3. Enrouleur selon l'une quelconque des revendications 1-2, dans laquelle l'imprimante d'étiquettes présente une unité d'impression RFID.

4. Enrouleur selon l'une quelconque des revendications 1-3, dans laquelle l'imprimante d'étiquettes présente une interface de base de données.

5. Enrouleur selon l'une quelconque des revendications 1-4, dans laquelle l'interface mécanique présente un système d'impression-pose d'étiquettes pour appliquer automatiquement des étiquettes imprimées sur le rouleau fini dans la station de transfert.

6. Enrouleur selon l'une quelconque des revendications 1-5, dans laquelle la bande de matériau est constituée d'un film plastique.
